Europäisches Patentamt

European Patent Office

Office européen des brevets

(19)

(11) Veröffentlichungsnummer: **0 269 965**
**B1**

(12) **EUROPÄISCHE PATENTSCHRIFT**

(45) Veröffentlichungstag der Patentschrift:
**27.06.90**

(21) Anmeldenummer: **87117148.4**

(22) Anmeldetag: **20.11.87**

(51) Int. Cl.⁵: **B60R 11/02, H05K 11/02**

(54) Verfahren und Schaltungsanordnung zur Diebstahlsicherung von Geräten, insbesondere Autoradiogeräten.

(30) Priorität: **02.12.86 DE 3641230**

(43) Veröffentlichungstag der Anmeldung:
**08.06.88 Patentblatt 88/23**

(45) Bekanntmachung des Hinweises auf die Patenterteilung:
**27.06.90 Patentblatt 90/26**

(84) Benannte Vertragsstaaten:
**DE FR GB IT SE**

(56) Entgegenhaltungen:
**EP-A- 0 108 270**
**EP-A- 0 195 972**
**DE-C- 3 520 395**

(73) Patentinhaber: **F + G MEGAMOS SICHERHEITSELEKTRONIK GMBH, Wiehlpuhl 4, D-5250 Osberghausen(DE)**

(72) Erfinder: **Epe, Matthias, Röthestrasse 22, D-5940 Lennestadt 16(DE)**
Erfinder: **Kolb, Hans, Prof. Dr., An der Aussicht 29, D-5270 Gummersbach 1(DE)**
Erfinder: **Schmitz, Rudolf, Wiedenerstrasse 3a, D-5275 Bergneustadt 1(DE)**

(74) Vertreter: **Berkenfeld, Helmut, Dipl.-Ing., An der Schanz 2, D-5000 Köln 60(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft ein Verfahren zur Diebstahlsicherung von Geräten, insbesondere Autoradiogeräten in einem Kraftfahrzeug, mit einem in das Gerät eingebauten Modul A und mit einem von dem Modul A getrennt angeordneten und mit diesem elektrisch verbundenen Modul B, mit Einlesen und Speichern eines geheimen Codes in den Modul B nach einem vorgegebenen Schema, Vergleich dieses im Modul B gespeicherten Codes mit einem im Modul A eingelesenen Code und Sperren einer zentralen Funktion des Gerätes, falls die Codes voneinander abweichen. Die Erfindung betrifft weiter eine Schaltungsanordnung zum Durchführen dieses Verfahrens.

Nach einem alten Stand der Technik wurden Autoradiogeräte rein mechanisch vor Diebstahl gesichert. Die Halterungen, mit denen sie mechanisch im Kraftfahrzeug befestigt waren, wurden besonders stark ausgebildet. Dadurch war es sehr schwierig oder erforderte viel Zeit, ein Autoradiogerät aus dem Fahrzeug auszubauen oder auch nur herauszureißen. In jüngerer Zeit ist man zu einer elektronischen Absicherung von Autoradiogeräten übergegangen und hat Verfahren der eingangs genannten Gattung entwickelt. Jedem Autoradio wird ein Modul mit einer Geheimzahl oder einem Code zugeordnet. Erst wenn der Benutzer diesen Code in das Radiogerät bzw. den mit ihm mechanisch und elektrisch verbundenen Modul eingibt, wird das Radio betriebsbereit. Ohne Kenntnis dieses Codes ist das Radiogerät für einen Dieb wertlos. Falls dies allgemein bekannt ist oder auf dem Radiogerät so angezeigt werden kann, daß der Dieb dies vor einem beabsichtigten Diebstahl merkt und beachtet, ist das Radiogerät theoretisch vor einem Diebstahl geschützt. Bei einer bekannten Diebstahlsicherung ist der Code auf einer besonderen Magnetbandkassette abgelegt (DE-C 3 520 395). Bei einem ersten Anschalten seines Autoradios nach dessen Abtrennen von der Stromversorgung schiebt der berechtigte Benutzer diese Kassette in den Kassettenteil seines Radiogerätes. Nach dem Anschalten tastet der Tonkopf den Code ab und führt ihn einem Decoder zu. Dieser steuert ein Umschaltglied an. Dieses setzt die zentrale Funktion dann wieder in Betrieb; zum Beispiel wird ein Schalter geschlossen und das Autoradiogerät damit wieder an Batteriespannung gelegt. In der Praxis ergeben sich jedoch zwei entscheidende Nachteile. Der eine liegt darin, daß auch der berechtigte Benutzer ohne Kenntnis des Codes sein Radiogerät nach Unterbrechen der Versorgungsspannung nicht mehr benutzen kann. Ein Unterbrechen der Versorgungsspannung ergibt sich zum Beispiel nach einigen Jahren bei Auswechseln der Batterie. Der Code muß dann neu eingegeben werden. Nach dieser langen Zeit hat aber der berechtigte Benutzer den Code mit Sicherheit vergessen und vielleicht auch verlegt. Zum Beispiel ist es denkbar, daß der berechtigte Benutzer die vorstehend genannte besondere Magnetbandkassette verlegt hat und nicht wiederfindet. Er gerät in Schwierigkeiten. Ein zweiter entscheidender Nachteil des bekannten Verfahrens liegt darin, daß ein intelligenter Dieb den in dem Modul eingespeicherten Code erkennen kann. Eine größer werdende Zahl von Elektronikern ist inzwischen in der Lage, einen Code zu knacken. Bekannt ist weiter ein Verfahren der eingangs genannten Gattung (EP-A 0 108 270). Die Schaltungsanordnung zum Durchführen dieses Verfahrens enthält mehrere Module. Ein in das Autoradiogerät selbst eingebauter Modul A bildet einen Decoder. Ein an einer abgelegenen Stelle im Motorraum oder der Karosserie eingebauter Modul B bildet einen Codierer. Er ist ein einfacher Widerstand. Nach den Angaben in der Patentschrift kann er Millionen verschiedene Werte aufweisen. Der Decoder oder der Modul A enthält im wesentlichen eine auf diesen Widerstand abgestimmte Brückenschaltung. Eine dritte Einheit ist elektrisch mit dieser Brückenschaltung verbunden. Bei ordnungsgemäßem Betrieb des Autoradiogerätes sind der Modul A, das heißt der Decoder bzw. die Brückenschaltung, und die dritte Einheit elektrisch mit dem Modul B, das heißt dem Codierer oder dem besonders ausgewählten Widerstand, verbunden. Der eingestellte Widerstand kann als Code angesehen werden. Im Betrieb liest der Decodierer oder der Modul B in vorgegebenen Zeitabständen den Code aus dem Modul A aus. Bei ordnungsgemäßem Betrieb stellt die dritte Einheit fest, daß die Brückenschaltung, das heißt der Decoder oder der Modul A, auf den Code des Moduls B abgestimmt ist. über diese dritte Einheit erhält das Autoradiogerät seine Betriebsspannung. Sobald jedoch ein Dieb das Autoradiogerät aus dem Kraftfahrzeug herausnimmt, entfällt die Abstimmung der Brückenschaltung im Modul A oder dem Decoder auf den Code des Moduls B. Die dritte Einheit stellt dieses Ungleichgewicht fest. Sie sperrt eine zentrale Funktion im Autoradiogerät. Zum Beispiel wird die Zufuhr der Betriebsspannung unterbrochen. Das Radiogerät wird stumm. Diese Diebstahlsicherung ist einfach zu überlisten. Ein elektronisch geschulter Dieb kann mit einfachen Mitteln herausfinden, auf welchen Widerstand oder Code der Modul B eingestellt bzw. auf welchen Widerstand die Brückenschaltung abgestimmt ist. Durch Anschließen eines solchen Widerstandes an die Eingänge der Brückenschaltung bzw. an den Modul A kann der Dieb das ausgebaute Radiogerät wieder in Betrieb setzen. Schließlich ist noch eine weitere, ebenfalls mit einem Code oder Codewort arbeitende Diebstahlsicherung bekannt (EP-A 0 195 972). Diese enthält mechanische und elektronische Sicherheitselemente. Die mechanischen Sicherheitselemente bestehen im wesentlichen aus einem in das Radiogerät eingebauten Potentiometer mit einer elastischen Rückstellvorrichtung und aus einer in der Halterung angeordneten und auf den Schleifer des Potentiometers einwirkenden Verstellvorrichtung. Beim Einsetzen des Radiogerätes in seine Halterung verschiebt die Verstellvorrichtung den Schleifer. Das Potentiometer nimmt einen bestimmten Wert an. Dieser wird in einen Speicher eingelesen. Weiter liest der Hersteller ein bestimmtes Codewort in den Speicher ein. Der Käufer erhält dieses Codewort in einem verschlossenen Umschlag. Bei der ersten Inbetriebnahme öffnet der Käufer diesen Umschlag

und gibt das Codewort über Tasten in das Radiogerät bzw. den Speicher ein. Bei Übereinstimmung des vom Käufer eingegebenen Codewortes mit dem vom Hersteller eingegebenen Codewort kann das Radiogerät in Betrieb genommen werden. Bei erneuter Inbetriebnahme prüft ein Mikroprozessor, ob der Wert des Potentiometers und damit dessen Stellung mit dem im Speicher abgelegten Wert übereinstimmt. Bei Übereinstimmung kann das Radiogerät in Betrieb genommen werden. Bei fehlender Übereinstimmung wird dies auf einem Display angezeigt. Der Benutzer wird zur Eingabe des Codewortes aufgefordert. Der berechtigte Benutzer kennt dies bzw. sollte dies kennen. Der Dieb kennt es nicht. Das heißt, daß der berechtigte Benutzer das Codewort eingeben kann und das Radiogerät damit in Betriebsbereitschaft schaltet. Aber auch der berechtigte Benutzer ist hilflos und kann sein Radiogerät nicht einschalten, falls er das Codewort vergessen haben sollte. Weiter gilt auch für diese bekannte Diebstahlsicherung, daß auch hier ein elektronisch geschulter Dieb das Codewort erkennen kann. Insbesondere bereitet es einem geschickten Dieb keine Schwierigkeiten, durch manuelles Verstellen des Schiebers diejenige Stellung herauszufinden, bei der das Potentiometer den in den Speicher eingegebenen Wert aufweist.

Hiervon ausgehend stellt sich für die vorliegende Erfindung die Aufgabe, ein Verfahren zur Diebstahlsicherung so auszubilden, daß sich der berechtigte Benutzer keinen Code merken muß und dieser Code auch von einem elektronisch geschulten Dieb nicht erkannt werden kann.

Die Lösung für diese Aufgabe ergibt sich bei einem Verfahren der eingangs genannten Gattung nach der Erfindung dadurch, daß im Modul B ein Code-Signal erzeugt wird, der Modul A dieses Code-Signal in vorgegebenen Zeitabständen ausliest und mit einem in ihm abgespeicherten Code-Signal vergleicht und die zentrale Funktion gesperrt wird, falls die Code-Signale nicht übereinstimmen. Im Unterschied zum Stand der Technik begnügt sich die Erfindung damit nicht mehr mit dem Einspeichern eines einfachen Codes in den Modul B, was in den beschriebenen Fällen auf das Einstellen eines Widerstandes hinauslief. Statt dessen wird im Modul B ein Code-Signal erzeugt. Unter einem Code-Signal ist eine Aufeinanderfolge von verschiedenen Werten zu verstehen. Dieses Code-Signal wird zum Beispiel digital erzeugt und abgespeichert. Auch ein elektronisch geschulter Dieb kann ein solches Code-Signal nicht oder nur mit sehr großen Schwierigkeiten erkennen und nachahmen. Damit schließt die Erfindung mit einer an Sicherheit grenzenden Wahrscheinlichkeit aus, daß ein Autodieb den Code, genauer das Code-Signal, knacken kann. Der Modul A liest dieses Code-Signal in vorgegebenen Zeitabständen aus dem Modul B aus. Damit reicht es nicht mehr aus, daß ein einmal im Modul A abgespeichertes Code-Signal einmal mit dem im Modul B erzeugten Code-Signal übereinstimmt. Diese Übereinstimmung wird in den vorgegebenen Zeitabständen ständig erneut überprüft.

Auch dies steigert die Sicherheit gegenüber Manipulationen.

Wie ausgeführt, verwehrt die Erfindung dem Dieb auch ein Erkennen oder Knacken des Codes. Hierzu ist in einer weiteren Ausgestaltung vorgesehen, daß zu Beginn eines Betriebsablaufs in dem Modul B ein Code-Signal nach Zufallskriterien erzeugt, abgespeichert, in den Modul A eingelesen und dort ebenfalls abgespeichert wird und der Modul A im weiteren Betrisbablauf des aus dem Modul B ausgelesenen Code-Signal mit diesem in ihm abgespeicherten Code-Signal vergleicht. Das zur Betriebsbereitschaft des Radiogerätes führende Code-Signal ändert sich somit ständig nach Zufallskriterien. Es nutzt dem Dieb nichts, falls er ein Schema erkennt, gemäß dem ein Hersteller die Module codiert, da es ein solches Schema nicht gibt. In bestimmten Zeitabständen in der Größenordnung von wenigen Minuten erzeugt der Modul B immer ein neues Code-Signal. Dieses wird um Modul A als Referenzcode abgespeichert. Das im Modul B jeweils anstehende Code-Signal wird mit diesem im Modul A abgespeicherten Referenzcode verglichen. Damit Störungen, wie zum Beispiel Schwankungen der Betriebsspannung, nicht sofort zu einem Vergleich führen, der eine Nicht-Übereinstimmung vortäuschen würde, wird die zentrale Funktion in einer weiteren Ausgestaltung der Erfindung erst nach mehreren Vergleichen gesperrt. Zum Erhöhen der Diebstahlsicherheit ist in einer weiteren Ausgestaltung vorgesehen, daß bei Eintreten bestimmter äußerer Ereignisse in dem Modul B ein neues Code-Signal nach Zufallskriterien erzeugt wird. Ein solches äußeres Ereignis ist zum Beispiel das Schließen oder Öffnen des Türschloßes, das Anlassen des Motors nach einer Betriebspause usw.

Die erfindungsgemäß erreichte hohe Sicherheit könnte theoretisch dazu führen, daß auch der berechtigte Benutzer das Radiogerät nicht in Betriebsbereitschaft versetzen kann. So kann das erfindungsgemäße Verfahren nicht ohne weiteres unterscheiden, ob ein Dieb oder der berechtigte Benutzer oder eine von diesem beauftragte Werkstatt das Radiogerät mit dem Modul A ausbaut. Zum Vermeiden eines solchen Ärgernisses ist in einer weiteren Ausgestaltung vorgesehen, daß das in dem Modul B nach Zufallskriterien erzeugte Code-Signal in einen mit den Modulen A und B verbundenen und mit diesen bezüglich des Code-Schemas identischen Modul C eingelesen und dort abgespeichert wird. Wenn nach dem Ausbau des Radiogerätes und dessen Moduls A mit einer anschließenden Reparatur oder durch das Einsetzen eines Austausch-Radiogerätes mit einem neuen Modul A des ursprünglich in dem Modul A abgespeicherte Referenzcode-Signal verlorengeht, würde der Modul A des neu eingebauten Radiogerätes im Modul B nicht des in ihm abgespeicherten Code-Signal erkennen. Die Betriebsbereitschaft würde nicht hergestellt oder ginge verloren. Nun kommt der Modul C zur Wirkung. Er wird getrennt vom Modul B oder gemeinsam mit diesem in einem einzigen Gehäuse angeordnet. Nach Einbau eines neuen Radiogerätes mit dem diesem zugeordneten neuen Modul A stellt der Modul B fest, daß im Modul A das jungfräuliche, aber im Modul C das gleiche Code-Signal wie in ihm selbst abgespeichert ist. Dies führt dazu, daß der Modul B das bestehende oder ein neues nach Zufallskriterien erzeugtes Sicherungscode-Signal an die Module A und C übergibt. Gleichzeitig wird das Radiogerät betriebsbereit.

Es wurde ausgeführt, daß das Radiogerät bei fehlender Übereinstimmung der Code-Signale aus den Modulen A und B seine Betriebsbereitschaft verliert. Ursache hierfür ist ein Ausbau des Radiogerätes durch einen Dieb. Damit dieser bei einem Diebstahl zusätzlich abgeschreckt wird, ist in einer weiteren Ausgestaltung vorgesehen, daß gleichzeitig mit dem Sperren einer zentralen Funktion im Modul A dieser ein einen Alarm auslösendes Signal zum Modul B sendet und dieser Zustand auf einem Display im Modul A angezeigt wird. Die einzelnen Module können nicht nur bei äußerem Eingriff durch einen Dieb ausfallen oder voneinander getrennt werden. Ebenso können sie durch Versagen von Einzelteilen ausfallen. Damit der Benutzer dies und damit den Grund der fehlenden Betriebsbereitschaft seines Radiogerätes erkennt, ist in weiteren Ausgestaltungen vorgesehen, daß bei Ausfall des Modules B oder des Modules C dies im Display im Modul A angezeigt wird.

Es wurde ausgeführt, daß das Radiogerät seine Betriebsbereitschaft nach Erzeugen eines Code-Signales im Modul B erhält. Der Modul B kann aber erst nach dem Einbau und Verbinden sämtlicher Module und anderer Teile und deren Anschluß an eine Batteriespannung usw. tätig werden. Dies würde heißen, daß das Radiogerät erst nach vollständigem Einbau in ein Kraftfahrzeug betriebsbereit wäre. Vorher oder nach einem Ausbau für eine Reparatur und dergleichen könnte es nicht betriebsbereit geschaltet werden. Zum Vermeiden eines solchen Übelstandes sieht die Erfindung vor, daß in jeden Modul vor Beginn des ersten Betriebsablaufes vom Hersteller ein sogenanntes jungfräuliches Code-Signal oder Start-Code-Signal eingestellt wird. Mit einem solchen jungfräulichen Code-Signal ist das Radiogerät betriebsbereit. Es ist jedoch noch nicht gesichert. Diese Sicherung entsteht erst bei Beginn des Betriebsablaufes, wenn der Modul B das Sicherungscode-Signal in der geschilderten Weise nach Zufallskriterien erzeugt und in den beiden anderen Modulen abspeichert.

Bei Ausfall des Moduls B kann der Modul C dessen Funktion übernehmen. In einem solchen Fall wird der Modul A ein Code-Signal aus dem Modul C auslesen. Bei Einsetzen eines neuen Moduls B wird dieser das im Modul A oder im Modul C als Referenzcode-Signal abgespeicherten Code-Signal auslesen und in sich selbst abspeichern. Dadurch wird ein mit einem Start-Code-Signal eingesetzter Modul B an die Anordnung angepaßt. Aus dem Modul A oder dem Modul C liest es das vom alten Modul B zuletzt erzeugte Code-Signal aus. Ähnlich gilt, daß bei Einsetzen eines neuen Moduls C dieser das im Modul A oder im Modul B abgespeicherte Code-Signal ausliest und in sich selbst abspeichert.

Es ist denkbar, daß die Anordnung zu Beginn einer Reparatur oder aus anderen Gründen entsichert werden soll. Hierzu muß die Anordnung in den Zustand versetzt werden, den sie vor der ersten Inbetriebnahme innehatte. Hierzu ist vorgesehen, daß bei Eintreten bestimmter äußerer Ereignisse im Modul A das aus dem Modul B ausgelesene und gespeicherte Code-Signal gelöscht und das Start-Code-Signal reaktiviert wird. Das Start-Code-Signal führt zu einer entsicherten Betriebsbereitschaft. Die bestimmten äußeren Ereignisse werden willkürlich ausgelöst und durch ein- oder mehrmaliges Betätigen von zum Beispiel einem im Stromkreis der Module liegenden Schalter, Tür- oder Zündschloß oder dergleichen dargestellt. Hierzu wird unter Umständen der normale Zündschlüssel benutzt. Dabei geht man davon aus, daß der Besitzer des Zündschlüssels ein berechtigter Benutzer ist.

Falls ein Autodieb den Zündschlüssel besitzen und damit das gesamte Kraftfahrzeug einschließlich Radiogerät stehlen kann, bedarf dieses sowieso keiner Sicherung mehr. Um die Entsicherung des Radiogerätes weiter zu erschweren, ist in einer weiteren Ausgestaltung nach der Erfindung vorgesehen, daß die bestimmten Ereignisse durch ein zum Modul B übertragenes codiertes Signal dargestellt werden. Dieses kann auf verschiedene Weise erzeugt werden. Es kann eingerichtet werden, daß nur der berechtigte Benutzer oder die Werkstätte das codierte Signal erzeugen kann.

Die erfindungsgemäße Schaltungsanordnung enthält im wesentlichen das Radiogerät und die Module A, B und C. Der Modul A kann als Teil des Radiogerätes angesehen werden. Er ermöglicht unter anderem die Sperrung einer zentralen Funktion des Radiogerätes. Zum Beispiel wird die Verbindung zur Batteriespannung oder eine Verbindung im Hoch- oder Niederfrequenzteil getrennt. Der Modul B ist ein Sicherungsmodul. Der Modul C ist ein Redundanzmodul. Die Module B und C können getrennt oder gemeinsam im Kraftfahrzeug angeordnet werden. Die drei Module haben die folgenden Eigenschaften:

Modul A: im Radiogerät

Modul A kann von Modul B beschrieben werden. Weiter kann Modul A aus Modul B lesen.

Modul B: Alarmzentrale

Modul B erzeugt nach Zufallskriterien ein Sicherungscode-Signal. Dieses kann aus verschiedenen Teilen bestehen. Modul B überträgt dieses an Modul A und an Modul C. Modul B kann aus Modul A und aus Modul C lesen.

Modul C: Redundanzmodul

Bei der im folgenden zuerst beschriebenen Ausführungsform ist der Modul C ein reiner Speicher. Er kann nur beschrieben werden. Bei der als zweite erläuterten Ausführungsform übernimmt der Modul C Funktionen des Moduls B. Das heißt, der Modul C kann jetzt aus Modul A und Modul B lesen. Weiter kann er Modul A beschreiben.

In der Praxis wird der Modul B an einer vom Radiogerät und dem Modul A abgelegenen Stelle angeordnet und ist nur elektrisch mit diesen verbunden. Dabei sollte der Modul B gemäß der Erfindung mechanisch so an oder in dem zu schützenden Gegenstand, wie zum Beispiel einem Kraftfahrzeug, befestigt sein, daß er nur mit hohem Zeitaufwand entfernbar ist. Weiter empfiehlt die Erfindung, daß der Modul B an einer schwer zugänglichen Stelle angeordnet ist. Die Erfindung geht davon aus, daß der durch sie erreichbare Diebstahlschutz allgemein und damit auch einem potentiellen Dieb bekannt ist. Auf der Frontseite des Radiogerätes kann hierauf mit einem entsprechenden Vermerk oder einem für einen solchen Schutz bekannten Markennamen hingewiesen werden. Der kundige Dieb wird damit versuchen, sowohl das Radiogerät mit dem Modul A als auch den Modul B auszubauen, um ein betriebsbereites Radiogerät zu erhalten. Das Radiogerät mit dem Modul A kann er verhältnismäßig einfach ausbauen. Das Modul B kann er dagegen überhaupt nicht oder nur mit hohem Zeitaufwand und gegebenenfalls dessen mechanischer Zerstörung ausbauen. Der kundige Dieb weiß dies. Deshalb wird er von einem Diebstahl abgeschreckt und wird einen solchen erst gar nicht versuchen.

In einer weiteren Ausgestaltung ist noch der Modul C vorgesehen. Er ist mit den Modulen A und B elektrisch verbunden. Mit dem Modul B kann er räumlich gemeinsam, zum Beispiel in einem einzigen Gehäuse angeordnet sein.

Im folgenden wird die Erfindung am Beispiel von zwei Ausführungsformen beschrieben. Die erste Ausführungsform geht von einem grundsätzlich gesicherten Betriebszustand aus. Bei einem mechanischen oder elektrischen Versagen irgendeines Teiles verliert das Radiogerät seine Betriebsfähigkeit. Bei der zweiten Ausführungsform wird das Radiogerät bei einem Ausfall entsichert. Das heißt, daß es ohne den erfindungsgemäßen Diebstahlschutz weiter betrieben werden kann.

Ausführungsform I

Im ersten Teil der Beschreibung dieser Ausführungsform wird erläutert, wie die Schaltungsanordnung nach dem Einbau in ein Kraftfahrzeug in eine gesicherte Betriebsbereitschaft versetzt und diese erhalten wird. In einem zweiten Teil der Beschreibung wird erläutert, was bei Ausfall eines Moduls zum Beispiel durch mechanisches oder elektrisches Versagen von Einzelteilen geschieht. In einem weiteren Teil der Beschreibung wird erläutert, wie das Radiogerät zum Beispiel zur Wartung ausgebaut und hierzu entsichert werden kann.

Vor Einbau der gesamten Anordnung aus dem Radiogerät mit dem Modul A und den Modulen B und C am Band des Fahrzeugherstellers erhält jeder Modul ein jungfräuliches Code-Signal. Dies führt zu einem erlaubten Betriebszustand. Das Radiogerät ist betriebsbereit. Ein Betriebsablauf kann nun beginnen. Dieser wird durch ein äußeres Ereignis ausgelöst. Beim ersten betätigen des Tür- oder Zündschlosses, der Zentralverriegelung usw., zum Beispiel beim ersten Abschließen des Fahrzeuges, wird im Modul B nach Zufallskriterien ein Code-Signal erzeugt und dieses an Modul A und C übergeben. Dieses Code-Signal wird dort als sogenanntes Referenzcode-Signal abgespeichert. Damit ist die Anordnung gesichert.

Der Modul A im Radiogerät fragt nun nach jeweils festgelegten Zeitabständen in Modul B nach dem aktuell gültigen Code-Signal, dem sogenannten Sicherungscode-Signal. Dieses wird von Modul A eingeholt und dort mit dem abgespeicherten Referenzcode-Signal verglichen. Stimmen beide überein, bleibt das Radiogerät bis zur nächsten Abfrage betriebsbereit. Die Zeitabstände betragen zum Beispiel zwei Minuten.

Stimmt das von Modul A aus B eingeholte Code-Signal nicht mit dem abgespeicherten Referenzcode-Signal überein, wird der Lesevorgang noch mehrmals wiederholt. Wird auch nach wiederholten Leseversuchen keine Übereinstimmung der Code-Signale festgestellt, sperrt sich das Radiogerät an zentraler Stelle selbst. Weiter gibt es an Modul B ein Signal, und dort wird ein Alarm ausgelöst. Dies wird auf einem Display im Modul A angezeigt.

Das gleiche geschieht, wenn auf Anforderung von A der Modul B kein Sicherungscode-Signal bereitstellt.

Nach einer solchen Sperrung kann das Radiogerät vom Benutzer nicht mehr in Betrieb genommen werden. Nur im Herstellerwerk läßt sich die Betriebsfähigkeit des Radiogerätes durch entsprechende Programmierung wieder erreichen.

Die gesamte Anordnung und damit auch das Radiogerät verbleiben im gesicherten und gleichzeitig betriebsbereiten Zustand, bis der berechtigte Benutzer die Anordnung entsichert. Dann ist das Radiogerät, auch ohne die Sicherung von Diebstahl, betriebsbereit. Es kann nur entsichert werden, wenn alle drei Module vor der Einleitung der Prozedur ein gültiges Sicherungscode-Signal aufweisen. Im übrigen wird dies weiter unten erläutert.

Modul B wechselt nach bestimmten äußeren Ereignissen, wie zum Beispiel Abschließen der Türen, Betätigen des Zündschlosses, unter Zugrundelegung der Zufallskriterien, das Sicherungscode-Signal. Dies geschieht so, daß zunächst das alte Sicherungscode-Signal auf Gültigkeit überprüft wird. Dann wird von Modul B ein neues Sicherungscode-Signal erzeugt und dieses als Referenzcode-Signal an A und an C übergeben. Danach ist dann das neue Sicherungscode-Signal gültig.

Die Anordnung ist so ausgebildet, daß das Radiogerät bei Ausfall eines Modules, was ja durch einen Dieb verursacht sein könnte, an einer zentralen Stelle gesperrt wird. Ein Modul kann aber auch durch elektrisches oder mechanisches Versagen eines Einzelteils ausfallen. Ein solcher Modul muß in einer Werkstätte gegen einen neuen ausgetauscht werden können. Dabei muß er sich an die noch in der Anordnung vorhandenen beiden anderen Module anpassen und mit diesen zusammen wieder die Betriebsbereitschaft herstellen. Im einzelnen gilt:

Ausfall von Modul A:

Zwischen den beiden Zeitabschnitten, zwischen denen im Modul B ein neues Code-Signal nach Zufallskriterien erzeugt und an die anderen Module übergeben wird, liest Modul B aus Modul A das dort abgespeicherte Referenzcode-Signal zurück. Falls dabei kein oder kein gültiges Code-Signal übergeben wird, bedeutet dies, daß der Modul A ausgefallen ist.

Der Modul A muß nun gegen einen neuen Modul ausgetauscht werden. Dieser soll Modul A' genannt werden. Wie jeder neue Modul enthält der Modul A' ein jungfräuliches Code-Signal. Bei Einsetzen des Moduls Aé in die Anordnung liegen nun zwei verschiedene Codesignale vor. In den Modulen B und C sind die gleichen Referenzcodes-Signale abgespeichert. In Modul A' ist noch das jungfräuliche Code-Signal abgespeichert. Nach dem Einsetzen des Moduls A' in die Anordnung übernimmt er aus Modul B oder Modul C das dort abgespeicherte Referenzcode-Signal und legt dieses in seinem eigenen Speicher ab. Das zum Modul A' gehörende Radiogerät ist dann betriebsbereit.

Ausfall von Modul B:

Bei Ausfall des Moduls B, zum Beispiel wegen eines Diebstahl oder wegen eines mechanischen oder elektrischen Versagens, kann der Modul A das in Modul B abgespeicherte Sicherungscode-Signal nicht mehr aus diesem auslesen. Damit wird das Radiogerät an einer zentralen Funktion gesperrt und ist nicht mehr betriebsbereit. Der fehlerhafte Modul B muß dann in einer Werkstätte durch einen neuen Modul B' ersetzt werden. Dieser enthält ein jungfräuliches Code-Signal. Nach Einsetzen des Moduls B' in die Anordnung stellt dieser Modul B' fest, daß die in den Modulen A und C abgespeicherten Referenzcodesignale übereinstimmen und er selbst das jungfräuliche Code-Signal enthält. Dies ist ein zugelassener Betriebsfall. Der Modul B' liest das Referenzcode-Signal aus dem Modul A oder dem Modul C aus und speichert es in sich ab. Das Radiogerät ist wieder betriebsbereit.

Ausfall von Modul C.

Der Modul B überwacht auch den Modul C. Wie bei dem oben erläuterten Ausfall des Modules A geschieht dies zwischen den beiden Zeitabschnitten bei einem Wechsel des Sicherungscodesignales. Falls der Modul B aus dem Modul C ein von dem gültigen Referenzcode-Signal abweichendes Code-Signal ausliest, wird dies im Display des Radiogerätes angezeigt. In einer Werkstatt muß der fehlerhafte Modul C gegen einen neuen Modul C' ausgetauscht werden. Dieser Modul C' enthält das jungfräuliche Code-Signal. Nach dem Einsetzen des Moduls C' in die Anordnung stellt der Modul B fest, daß die in ihm und im Modul A abgelegten Codesignale bzw. Referenzcodesignale übereinstimmen und der Modul C' ein jungfräuliches Code-Signal enthält. Dies ist ein erlaubter Betriebsfall. Das im Modul A abgespeicherte Referenzcode-Signal wird in den Modul C eingelesen.

Die obige Erläuterung zeigt, daß bei Ausfall und anschließendem Auswechseln des fehlerhaften gegen einen neuen Modul die Anordnung sofort wieder abgesichert und das Radiogerät betriebsbereit ist.

Entsicherung von Modul A:

Es kann der Fall eintreten, daß das Radiogerät aus Gründen, die nichts mit den Modulen A, B und C und deren Funktion zu tun haben, ausgebaut werden muß. Im Normalfall würde dies, da ein Diebstahl zu vermuten ist, zu einem Alarm führen. Zum Vermeiden eines solchen Alarms wird der Modul A entsichert. Voraussetzung hierfür ist, daß die in sämtlichen drei Modulen abgespeicherten Codesignale übereinstimmen. Zum Entsichern müssen dann mehrere vorher festgelegte Ereignisse eintreten. Zum Beipspiel müssen das Tür- oder das Zündschloß mehrere Male hintereinander betätigt und/oder andere Schaltvorgänge nacheinander ausgelöst werden. Dadurch wird das im Modul A abgespeicherte Referenzcode-Signal gelöscht und das in ihm verbliebene jungfräuliche Code-Signal reaktiviert. Der Modul A ist dann entsichert. Der Modul kann ohne Auslösen eines Alarms ausgebaut werden. Ebenso ist das Radiogerät trotz Trennens seines Moduls A von den Modulen B und C betriebsbereit.

Nach dieser Entsicherung der Anordnung dund dem Ausbau des Moduls A behält der Modul B das Sicherungscode-Signal bei. Es wird nicht mehr gegen ein nach Zufallskriterien erzeugtes neues Sicherungscode-Signal ausgetauscht. Damit behält auch der Modul C das in ihm abgespeicherten Referenzcode-Signal bei. Bei Einbau des neuen Moduls A' stimmen dann die Codesignale der Module B und C überein, während der Modul A' das jungfräuliche Code-Signal enthält. In der oben beschriebenen Weise wird nun im Modul B ein neues Sicherungscode-Signal erzeugt, in die Module A und C eingelesen, und die Anordnung wird gesichert.

Ausführungsform II

Im vorstehenden wurde die Ausführungsform erläutert, bei der die Anordnung auch nach Ausfall eines der Module gesichert ist. Das heißt, daß eine zentrale Funktion des Radiogerätes gesperrt wird. Es ist nicht mehr betriebsbereit. Zum Wiederherstellen dieser Betriebsbereitschaft muß die Werkstätte aufgesucht werden. Dies ist lästig, falls der Benutzer gerade keine Zeit hat oder den nächsten normalen Besuch einer Werkstätte abwarten möchte. In einem solchen Fall wird er vorziehen, daß das Radiogerät seine Betriebsbereitschaft behält oder wiedererhält, auch wenn dies den Verlust der Absicherung vor einem Diebstahl bedeuten sollte. Die Erfindung sieht eine solche Betriebsart vor, bei der die Anordnung entsichert wird und das Radiogerät dann ungesichert betrieben werden kann. Diese Ausführungsform verlangt einen Modul C mit einem höheren Aufwand als bei der vorstehend besprochenen Ausführungsform. Der Modul C muß eine höhere Intelligenz aufweisen.

Grundsätzlich gilt für diese Ausführungsform, daß die Anordnung vor dem Ausbau eines Moduls entsichert werden muß. Hirzu wird das in dem Modul gerade abgelegte Code-Signal gelöscht und das in ihm verbliebene jungfräuliche Code-Signal reaktiviert. Im übrigen wird der Ausfall eines Moduls wieder auf dem Display des Radiogerätes angezeigt.

Dem Benutzer wird der Ausfall des Moduls angezeigt. Er wird zum Besuch einer Werkstatt aufgefordert.

Bei dieser Ausführungsform gilt bei Ausfall eines der drei Module das folgende:

Ausfall von Modul A:

Die Anordnung wird in der Werkstatt entsichert. Hierzu werden die im Modul B und im Modul C verbliebenen jungfräulichen Codesignale reaktiviert. Ein neues Radiogerät mit einem neuen Modul A wird eingesetzt. Auch dieser Modul A enthält das jungfräuliche Codesignal. Dieses ist dann in sämtlichen drei Modulen vorhanden. Durch ein äußeres Ereignis, wie zum Beispiel das erste Betätigen des Türschlosses, wird im Modul B in der weiter oben schon beschriebenen Weise ein Code-Signal nach Zufallskriterien erzeugt und an die Module A und C übergeben. Dort wird es als Referenzcode-Signal abgespeichert. Damit ist die Anordnung wieder gesichert.

Zum Erschweren von Manipulationen durch einen Dieb sollte die Anordnung nur dann entsichert werden können, wenn in den beiden Modulen B und C das gleiche Code-Signal abgelegt ist. Dieses muß sich vom jungfräulichen Code-Signal unterscheiden.

Ausfall von Modul B:

Bei Ausfall von Modul B übernimmt Modul C dessen Funktion. Das heißt, daß der Modul A innerhalb der genannten Zeitabstände das im Modul C gespeicherte Code-Signal abfragt und mit dem in ihm selbst abgespeicherten Referenzcode-Signal vergleicht. Von den Wünschen des Benutzers und dem sich hieraus ergebenden Aufwand hängt es ab, ob der Modul C von Zeit zu Zeit ein neues Sicherungscode-Signal erzeugt oder ob das ursprünglich noch vom Modul B erzeugte Sicherungscode-Signal gültig bleibt.

Vor dem Auswechseln des fehlerhaften Moduls B gegen einen neuen Modul B wird die gesamte Anordnung in der Werkstatt entsichert. Voraussetzung hierfür ist, daß die Sicherungscodesignale in den Modulen A und C übereinstimmen. Hierzu muß der Modul C als Senderbaustein das Code-Signal auf den Modul A übertragen.

Zum Entsichern wird zunächst der Modul B die Entsicherungscodesignale übertragen. Nach einer bestimmten Zeit leitet der Modul C die Entsicherungscodesignale in die Anordnung ein. Bei einer mindestens einmal erfolgreichen Übertragung dieses Entsicherungscodesignales ist die Anordnung entsichert.

Ausfall von Modul C:

Der Modul B stellt einen Ausfall des Moduls C fest. Wenn der Modul B dann weiter feststellt, daß im Modul A ein mit seinem eigenen Code-Signal übereinstimmendes Sicherungscode-Signal, das nicht jungfräulich ist, vorliegt, kann die Anordnung entsichert werden. Nach dieser Entsicherung liegen in den Modulen A und B jeweils die jungfräulichen Codesignale vor. Der fehlerhafte Modul C wird durch einen neuen Modul C, der ebenfalls ein jungfräuliches Sicherungscodesignal aufweist, ersetzt. In sämtlichen Modulen liegen dann die jungfräulichen Codesignale vor. Damit kann die Anordnung in der erläuterten Weise gesichert und die gesicherte Betriebsbereitschaft des Radiogerätes hergestellt werden.

Der schon genannte Vorteil der zweiten Betriebsart liegt darin, daß das Radiogerät auch nach dem Ausfall des Moduls B oder C betriebsbereit ist. Der Modul C verlangt einen höheren Aufwand. Bei Ausfall des Moduls B muß er Sendefunktionen übernehmen. Die Schnittstellen zwischen den Modulen sind redundant auszuführen. Die Module sind durch mehrere voneinander unabhängige Signalleitungen zu verbinden.

Zusätzliche Ausführungsformen III

Mit einem geringfügig höheren Aufwand erlaubt die Erfindung auch eine Kennzeichnung des Radiogerätes mit einer im Modul B abzuspeichernden Identitätsnummer. Diese Nummer wird vom Hersteller in den Modul eingegeben. Bei der Ausführungsform I wird bei einem Austausch des Moduls B dessen neue Identitätsnummer in die Module A und C übernommen, falls die in diesem abgespeicherten Sicherungscodesignale gleich sind. Bei einem Austausch des Moduls A oder des Moduls C wird deren alte Identitätsnummer in das neue eingetauschte Modul übernommen, falls in den beiden nicht getauschten Modulen die Sicherungscodesignale gleich sind und im getauschten Modul des jungfräulichen Code-Signal vorliegt. Immer dann, wenn in den drei Modulen jungfräuliche Codesignale vorliegen, überträgt der Modul B die Identitätsnummer auf die beiden anderen deren Module A und C. In diesen werden sie dauerhaft gespeichert. Die Identitätsnummer kann auf Tastendruck abgerufen werden. Die Herkunft eines gestohlenen Radiogerätes läßt sich damit durch Abruf dieser Identitätsnummer immer einwandfrei feststellen. Der dem Radiogerät zugeordnete Modul A ist in seiner Schaltung so ausgelegt, daß die Identitätsnummer auch ohne Mitwirken der beiden anderen Module auf seinem Display angezeigt werden kann.

**Patentansprüche**

1. Verfahren zur Diebstahlsicherung von Geräten, insbesondere Autoradiogeräten in einem Kraftfahrzeug, mit einem in das Gerät eingebauten Modul A und mit einem von dem Modul A getrennt angeordneten und mit diesem elektrisch verbundenen Modul B, mit Einlesen und Speichern eines geheimen Codes in den Modul B nach einem vorgegebenen Schema, Vergleich dieses im Modul B gespeicherten Codes mit einem im Modul A eingelesenen Code und Sperren einer zentralen Funktion des Gerätes, falls die Codes voneinander abweichen, dadurch gekennzeichnet, daß im Modul B ein Code-Signal erzeugt wird, der Modul A dieses Code-Signal in vorgegebenen Zeitabständen ausliest und mit einem in ihm abgespeicherten Code-Signal vergleicht und die zentrale Funktion gesperrt wird, falls die Code-Signale nicht übereinstimmen.

2. Verfahren nach Anspruch 1, dadurch gekennzeichnet, daß zu Beginn eines Betriebsablaufs in dem Modul B ein Code-Signal nach Zufallskriterien erzeugt, abgespeichert, in den Modul A eingelesen und dort ebenfalls abgespeichert wird und der Modul A im weiteren Betriebsablauf den aus dem Modul B ausgelesenen Code-Signal mit diesem in ihm abgespeicherten Code-Signal vergleicht.

3. Verfahren nach Anspruch 1, dadurch gekennzeichnet, daß die zentrale Funktion erst nach mehreren Vergleichen gesperrt wird.

4. Verfahren nach Anspruch 2, dadurch gekennzeichnet, daß bei Eintreten bestimmter äußerer Ereignisse in dem Modul B ein neues Code-Signal nach Zufallskriterien erzeugt wird.

5. Verfahren nach einem der Ansprüche 1 bis 4, dadurch gekennzeichnet, daß das in dem Modul B nach Zufallskriterien erzeugte Code-Signal in einen mit den Modulen A und B verbundenen und mit diesen bezüglich des Code-Schemas identischen Modul C eingelesen und dort abgespeichert wird.

6. Verfahren nach Anspruch 1, dadurch gekennzeichnet, daß gleichzeitig mit dem Sperren einer zentralen Funktion im Modul A dieser ein einen Alarm auslösendes Signal zum Modul B sendet und dieser Zustand auf einem Display im Modul A angezeigt wird.

7. Verfahren nach Anspruch 1 und 6, dadurch gekennzeichnet, daß bei Ausfall des Moduls B dies im Display im Modul A angezeigt wird.

8. Verfahren nach Anspruch 1, 5 und 7, dadurch gekennzeichnet, daß bei Ausfall des Moduls C dies im Display im Modul A angezeigt wird.

9. Verfahren nach Anspruch 2 und 5, dadurch gekennzeichnet, daß vor Beginn des ersten Betriebsablaufes in jedem Modul A, B, C vom Hersteller ein Start-Code-Signal eingestellt wird.

10. Verfahren nach Anspruch 1 und 5, dadurch gekennzeichnet, daß der Modul A ein Code-Signal aus dem Modul C ausliest.

11. Verfahren nach einem der Ansprüche 1 bis 10, dadurch gekennzeichnet, daß bei Einsetzen eines neuen Moduls B dieser das im Modul A oder Modul C abgespeicherten Code-Signal ausliest und in sich selbst abspeichert.

12. Verfahren nach einem der Ansprüche 1 bis 11, dadurch gekennzeichnet, daß bei Einsetzen eines neuen Moduls C dieser das im Modul A oder Modul B abgespeicherten Code ausliest und in sich selbst abspeichert.

13. Verfahren nach einem der Ansprüche 1 bis 12, dadurch gekennzeichnet, daß bei Eintreten bestimmter äußerer Ereignisse im Modul A des aus dem Modul B ausgelesene und gespeicherte Code-Signal gelöscht und das Start-Code-Signal reaktiviert wird.

14. Verfahren nach Anspruch 4 und 13, dadurch gekennzeichnet, daß die bestimmten äußeren Ereignisse durch ein- oder mehrmaliges Betätigen eines im Stromkreis der Module liegenden Schalters, Tür- oder Zündschlosses oder dergleichen dargestellt werden.

15. Verfahren nach Anspruch 14, dadurch gekennzeichnet, daß die bestimmten Ereignisse durch ein zum Modul B übertragenes codiertes Signal dargestellt werden.

16. Schaltungsanordnung zum Durchführen des Verfahrens nach den Ansprüchen 1 bis 15, mit einem Radiogerät und einem mit diesem räumlich und elektrisch verbundenen Modul A, dadurch gekennzeichnet, daß ein Modul B an einer vom Radiogerät und dem Modul A abgelegenen Stelle angeordnet und mit diesen elektrisch verbunden ist.

17. Schaltungsanordnung nach Anspruch 16, dadurch gekennzeichnet, daß der Modul B mechanisch so an oder in dem zu schützenden Gegenstand, insbesondere einem Kraftfahrzeug, befestigt ist, daß er nur mit hohem Zeitaufwand entfernbar ist.

18. Schaltungsanordnung nach Anspruch 17, dadurch gekennzeichnet, daß der Modul B an einer schwer zugänglichen Stelle angeordnet ist.

19. Schaltungsanordnung nach einem der Ansprüche 16 bis 18, dadurch gekennzeichnet, daß ein Modul C vorgesehen und mit den Modulen A und B elektrisch verbunden ist.

20. Schaltungsanordnung nach Anspruch 19, dadurch gekennzeichnet, daß der Modul C räumlich gemeinsam mit dem Modul B angeordnet ist.

**Claims**

1. A method of thief-proofing items of equipment, in particular car radios in a motor vehicle, comprising a module A which is fitted into the item of equipment and a module B which is arranged separately from the module A and which is electrically connected thereto, comprising reading-in and storage of a secret code in the module B in accordance with a predetermined scheme, comparison of said code which is stored in the module B with a code which is read-in in the module A and blocking of a central function of the item of equipment if the codes differ from each other, characterised in that a code signal is produced in the module B, the module A reads out that code signal at predetermined intervals of time and compares it to a code signal stored in same and the central function is blocked if the code signals do not coincide.

2. A method according to claim 1 characterised in that at the beginning of an operating procedure in the module B, a code signal is produced in accordance with random criteria, stored, read into the module A and also stored therein, and in the further operating procedure the module A compared the code signal which is read out of the module B to said code signal which is stored in the module A.

3. A method according to claim 1 characterised in that the central function is only blocked after a plurality of comparison operations.

4. A method according to claim 2 characterised in that, when certain external events occur a new code signal is produced in the module B in accordance with random criteria.

5. A method according to one of claims 1 to 4 characterised in that the code signal which is produced in the module B in accordance with random criteria is read into and stored in a module C which is connected to the modules A and B and which is identical to same in respect of the code scheme.

6. A method according to claim 1 characterised in that simultaneously with blocking of a central function in the module A module A sends the module B an alarm-triggering signal and that condition is displayed on a display in the module A.

7. A method according to claims 1 and 6 characterised in that in the event of failure of the module B, that is displayed in the display in the module A.

8. A method according to claims 1, 5 and 7 characterised in that in the event of failure of the module C that is displayed in the display in the module A.

9. A method according to claims 2 and 5 characterised in that before the beginning of the first operating procedure a start code signal is set by the manufacturer in each module A, B, C.

10. A method according to claims 1 and 5 characterised in that the module A reads a code signal out of the module C.

11. A method according to one of claims 1 to 10 characterised in that upon insertion of a new module B it reads out the code signal stored in the module A or the module C and stores same in itself.

12. A method according to one of claims 1 to 11 characterised in that upon insertion of a new module C it reads out the core stored in the module A or the module B and stores it in itself.

13. A method according to one of claims 1 to 12 characterised in that when certain external events occur, in the module A the code signal which is read out of the module B and stored is erased and the start code signal is re-activated.

14. A method according to claims 4 and 13 characterised in that the certain external events are represented by actuation one or more times of a switch or door or ignition lock or the like which is disposed in the circuit of the modules.

15. A method according to claim 14 characterised in that the certain events are represented by a coded signal which is transmitted to the module B.

16. A circuit arrangement for carrying out the method according to claims 1 to 15 comprising a radio device and a module A which is spatially and electrically connected thereto, characterised in that a module B is disposed at a location remote from the radio device and the module A and is electrically connected to the radio device and the module A.

17. A circuit arrangement according to claim 16 characterised in that the module B is mechanically secured to or in the article to be protected, in particular a motor vehicle, in such a way that it can only be removed after spending a great deal of time.

18. A circuit arrangement according to claim 17 characterised in that the module B is disposed at a location which is of difficult access.

19. A circuit arrangement according to one of claims 16 to 18 characterised in that a module C is provided and is electrically connected to the modules A and B.

20. A circuit arrangement according to claim 19 characterised in that the module C is spatially arranged jointly with the module B.

**Revendications**

1. Procédé de protection contre le vol d'appareils, en particulier d'autoradios, dans des véhicules automobiles, selon lequel un module A est incorporé dans l'appareil et un module B est monté séparément du module A et est connecté électriquement a celui-ci, un code secret est introduit et stocké dans le module B selon un schéma prédéfini, ce code stocké dans le module B est comparé à un code introduit dans le module A et une fonction centrale de l'appareil est bloquée si les codes diffèrent l'un de l'autre, caractérisé en ce qu'un signal de code est produit dans le module B, le module A lit ce signal de code à des intervalles prédéfinis et le compare à un signal de code contenu dans sa mémoire et la fonction centrale est bloquée si les signaux de code ne concordent pas.

2. Procédé suivant la revendication 1, caractérisé en ce qu'au début d'une séquence de fonctionnement, un signal de code est produit d'après des critères aléatoires, et stocké dans le module B, est introduit dans le module A et y est également stocké et le module A, au cours de la séquence de fonctionnement ultérieure, compare le signal de code obtenu du module B avec le signal de code contenu dans sa mémoire.

3. Procédé suivant la revendication 1, caractérisé en ce que la fonction centrale n'est bloquée qu'après plusieurs comparaisons.

4. Procédé suivant la revendication 2, caractérisé en ce que, lorsque des événements extérieurs déterminés surviennent dans le module B, un nouveau signal de code est produit d'après des critères aléatoires.

5. Procédé suivant l'une quelconque des revendications 1 à 4, caractérisé en ce que le signal de code produit dans le module B d'après des critères aléatoires est introduit dans un module C connecté aux modules A et B et identique à ceux-ci en ce qui concerne le schéma de code et y est stocké.

6. Procédé suivant la revendication 1, caractérisé en ce que, lors du blocage d'une fonction centrale dans le module A, celui-ci envoie simultanément un signal déclenchant une alarme au module B et cet état est affiché sur un affichage dans le module A.

7. Procédé suivant les revendications 1 et 6, caractérisé en ce qu'en cas de panne du module B, une indication est affichée sur l'affichage dans le module A.

8. Procédé suivant les revendications 1, 5 et 7, caractérisé en ce qu'en cas de panne du module C, une indication est affichée sur l'affichage du module A.

9. Procédé suivant les revendications 2 et 5, caractérisé en ce qu'avant le début de la première séquence de fonctionnement dans chaque module A, B, C, un signal de code de démarrage est imposé par le fabricant.

10. Procédé suivant les revendications 1 et 5, caractérisé en ce que le module A extrait un signal de code du module C.

11. Procédé suivant l'une quelconque des revendications 1 à 10, caractérisé en ce que, lors de la mise en place d'un nouveau module B, ce dernier extrait le signal de code stocké dans le module A ou dans le module C et l'enregistre dans sa mémoire.

12. Procédé suivant l'une quelconque des revendications 1 à 11, caractérisé en ce que, lors de la mise en place d'un nouveau module C, ce dernier extrait le signal de code stocké dans le module A ou dans le module B et l'enregistre dans sa mémoire.

13. Procédé suivant l'une quelconque des revendications 1 à 12, caractérisé en ce que lorsque des événements extérieurs déterminés surviennent dans le module A, le signal de code extrait du module B et stocké est effacé et le signal de code de démarrage est réactivé.

14. Procédé suivant les revendications 4 et 13, caractérisé en ce que les événements extérieurs déterminés sont représentés par un actionnement simple multiple d'un commutateur placé dans le circuit d'alimentation du module, d'une serrure de porte ou d'allumage ou d'éléments analogues.

15. Procédé suivant la revendication 14, caractérisé en ce que les événements déterminés sont représentés par un signal codé transmis au module B.

16. Montage de circuit pour l'exécution du procédé suivant les revendications 1 à 15, comportant un appareil de radio et un module A connecté électriquement et incorporé à celui-ci, caractérisé en ce qu'un module B est installé en un endroit distant de l'appareil de radio et du module A et est connecté électriquement à ceux-ci.

17. Montage de circuit suivant la revendication 16, caractérisé en ce que le module B est fixé mécaniquement sur l'objet à protéger, en particulier un véhicule automobile, ou dans celui-ci, de telle façon qu'il ne puisse en être démonté qu'au prix d'un travail fastidieux.

18. Montage de circuit suivant la revendication 17, caractérisé en ce que le module B est installé en un endroit difficile d'accès.

19. Montage de circuit suivant l'une quelconque des revendications 16 à 18, caractérisé en ce qu'un module C est prévu et est connecté électriquement aux modules A et B.

20. Montage de circuit suivant la revendication 19, caractérisé en ce que le module C est installé dans un espace commun avec celui du module B.